# FASCICULE DE BREVET EUROPEEN

(11) **EP 2 402 493 B1**
(45) Date de publication et mention de la délivrance du brevet: **10.02.2016**
(21) Numéro de dépôt: 11305783.0
(22) Date de dépôt: 21.06.2011
(51) Int. Cl.: D04H 11/08, E04B 1/88, E04B 1/94, F16L 59/02, B32B 5/06, B32B 5/26, B63B 3/68, B63B 29/02, D04H 1/4209, D04H 1/4218, D04H 1/4334, D04H 1/46, D04H 1/488, G10K 11/162

(54) **Panneau isolant**
Isolierpanel
Insulating panel

(30) Priorité: 21.06.2010 FR 1054904
(43) Date de publication de la demande: 04.01.2012
(73) Titulaire: ALSTOM Transport Technologies, 92300 Levallois-Perret (FR); Institut Francais du Textile et de l'Habillement, 75013 Paris (FR)
(72) Inventeur: Dindeleux, Jean-Jacques, 59990 SEBOURG (FR); Magniez, Carole, 62980 VERMELLES (FR); Bouvier, Pierre, 59100 Roubaix (FR)
(74) Mandataire: Jacobson, Claude

(56) Documents cités:
- EP-A1- 0 283 385
- EP-A1- 0 470 723
- EP-A2- 0 133 119
- WO-A2-2010/001034
- FR-A- 996 972
- GB-A- 371 846
- US-A- 3 930 375
- US-A- 4 399 175
- US-A- 4 983 451

## Description

La présente invention concerne les panneaux isolants, notamment sur le plan acoustique et/ou thermique, ainsi que de tels panneaux aptes à servir également de panneaux pare-feu - encore appelés retardateurs de propagation de feu ou boucliers thermiques - au sens de la norme EN 1363-1.(Par soucis de concision, on emploiera le terme de panneau pare-feu pour désigner ce type de produit dans le reste de la présente demande de brevet).

Il est connu des panneaux pare-feu constitués de plaques de métal de type acier. Ils sont efficaces, mais présentent un certain nombre d'inconvénients. Tout d'abord, ils sont relativement lourds, ce qui peut être gênant quand on vise certaines applications comme des moyens de transport par exemple. Ensuite, ils sont rigides : il est donc nécessaire de les fabriquer en usine avec autant de dimensionnements et autant de configurations, de formes qu'on envisage d'applications, ce qui est contraignant sur le plan industriel. En outre, s'ils répondent correctement aux contraintes exigées d'un panneau pare-feu, en revanche leurs propriétés, en usage normal, en tant qu'isolants thermiques ou en tant qu'isolantes acoustiques par exemple, sont largement perfectibles.

Il est connu par ailleurs des panneaux à base de laine de verre liée par un liant organique et associée généralement à des feuilles de parement métallique : si ces panneaux sont plus légers que des panneaux en métal, ils sont assez épais, donc encombrants, et ils restent peu flexibles.

Par ailleurs, il a été proposé dans la demande de brevet WO 2010/001034 un produit d'isolation thermique et insonorisant autoportant, constitué d'une couche de fibres enchevêtrées avec des particules minérales. Ces fibres et particules sont amalgamées par des moyens de liaison permettant à l'ensemble d'assurer une autoportance et une protection thermique du produit en question. Ces moyens de liaison sont des fibres liantes thermofusible ou des particules en polymère réactives ou fusibles. Ce produit, s'il paraît apte à présenter effectivement des propriétés d'isolation thermique et acoustique en utilisation normale, n'est pas conçu pour pouvoir, en outre, remplir le rôle de produit pare-feu. En outre, étant spécifiquement conçu pour être autoportant, il doit être relativement rigide, et ne présente donc pas la flexibilité nécessaire pour s'adapter à toute utilisation, notamment pour épouser toute surface, qu'elle soit plane ou courbe.

En outre, le document EP0470723 A1 dévoile le préambule de la revendication 1.

L'invention a alors pour but de remédier au moins en partie aux divers inconvénients des solutions antérieures exposées ci-dessus. Elle a notamment pour but la conception d'un panneau isolant (thermique et/ou acoustique) qui soit également apte à être utilisé en tant que panneau pare-feu, et qui puisse, en outre, s'adapter plus aisément à des applications diverses.

L'invention a pour objet un panneau isolant comportant une couche de matériau particulaire comprenant essentiellement des particules minérales, ladite couche étant dis posée entre deux couches textile comprenant des fibres minérales et/ou des fibres à base d'au moins un polymère thermostable, caractérisé en ce que l'une au moins des couches textile comprend des fibres minérales et des fibres à base d'au moins un polymère thermostable, la proportion pondérale entre fibres minérales et fibres à base d'au moins un polymère thermostable dans ladite au moins une couche textile étant comprise entre 50/50 et 90/10.

On peut ainsi avoir des couches textile composite associant un matériau polymère lui conférant de la souplesse et un matériau minéral, réfractaire, le rendant résistant à très haute température, les couches textile renforçant ainsi l'effet pare-feu de la couche en particules minérales.

On comprend, de façon connue, par « thermostables » des polymères aptes à résister à de hautes températures, notamment jusqu'à au moins 150 ou 200° C sans détérioration notable.

On comprend le terme « panneau » au sens large, comme tout produit présentant une épaisseur plus faible que ses deux autres dimensions, sans être nécessairement un produit plan ou de forme nécessairement de type parallélépipédique. Sa flexibilité, et sa relative minceur lui permettent d'ailleurs d'être éventuellement stocké sous forme de rouleaux.

Ce type de produit présente ainsi une structure de sandwich, où des particules minérales essentiellement libres constituent une couche spécifique, entre deux couches textile. Cette configuration, de manière surprenante, s'est avérée très avantageuse : elle confère au produit d'excellentes propriétés pare-feu, vraisemblablement parce qu'une telle couche de particules minérales permet particulièrement bien de diffuser et de répartir la chaleur sur toute sa surface, limitant la création de points chauds venant localement détruire le panneau. En outre, un tel produit, en usage normal, présente de bonnes propriétés d'isolation thermique et phonique (par absorption vibratoire). Et ces propriétés sont atteintes avec une épaisseur de « sandwich » qui peut être relativement faible, par exemple au plus 25, 20 voire 15 mm. Ce produit est très flexible, grâce aux couches textile, et peut être découpé avec des outils assez simples : il peut donc s'adapter aisément aux applications les plus diverses, par exemple pour isoler et protéger d'un feu éventuel des gaines de climatisation.

De préférence, les particules minérales sont à base d'au moins un matériau choisi parmi la vermiculite, l'alumine et la perlite. La vermiculite, notamment, est intéressante parce qu'elle présente une faible masse volumique et qu'elle ne dégage pas ou très peu de fumées quand elle est soumise à très haute température (en cas de feu).. L'alumine est également intéressante, car elle a une température de fusion extrêmement élevée (2000°C) elle est incombustible, et elle est disponible commercialement sous la forme de sphères creuses.

Ces particules minérales peuvent être des particules pleines, de type poudre, ou creuses, de type sphères creuses. L'air entre les grains, et/ou dans les grains dans le cas de sphères creuses, est favorable au caractère d'isolant thermique de la couche, et donc du panneau, en usage normal.

Selon une variante, on préfère une granulométrie assez élevée pour les particules minérales, leur dimension pouvant être comprise entre 2500 et 800 µm, notamment entre 2300 et 1000 µm.

Selon une autre variante, on choisit une granulométrie moins élevée, avec notamment une dimension de particules minérale inférieure ou égale à 800 µm, notamment inférieure ou égale à 500 µm, et de préférence comprise entre 200 et 500 µm.

Avantageusement, l'une au moins des couches textile est une couche textile nontissé. C'est ce type de textile qui permet d'associer en une même couche des fibres de nature ou de dimension/diamètre différent, et qui donne un aspect très dense, très cohérent et homogène, les fibres étant intimement enchevêtrées entre elles.

Au moins une des couches textile comprend des fibres minérales à base d'au moins un matériau choisi parmi le basalte, le verre, la silice. Le basalte est le matériau préféré, car particulièrement réfractaire.

Selon une première variante, l'une au moins des couches textile, par exemple l'ensemble de celles-ci, est essentiellement, notamment entièrement, composée de fibres minérales, par exemple à base de basalte, de verre ou de silice comme mentionné plus haut.

Avantageusement, au moins une des couches textile comprend des fibres à base de polymère(s) thermostable(s), par exemple en polyamide-imide (fibres disponibles commercialement notamment auprès de la société Kermel), aramide(s) et/ou en polyacrylate(s). Ces fibres résistent jusqu'à au moins 200 °C, généralement jusqu'à des températures atteignant 300° à 500°C, et, en cas de très hautes températures, à proximité d'un feu notamment, elles se carbonisent en gardant cependant une certaine tenue au moins pendant un certain temps. Selon cette variante, le pourcentage en poids de fibre minérale est de préférence choisi entre 60 et 85 % en poids de la couche textile). De préférence, les couches sont assemblées entre elles par aiguilletage des couches textile à travers la couche de matériau particulaire disposée entre celles-ci. Ce procédé est surtout connu pour améliorer la cohésion des fibres dans une couche de non tissé, en modifiant à l'aide d'aiguilles l'orientation d'au moins une partie des fibres de la couche. Ce procédé a un effet uniquement mécanique, sans aucun apport de fils ou liants (thermofusibles ou chimiques) supplémentaires. Il s'est avéré, dans le cadre de l'invention, de manière surprenante, que l'on pouvait utiliser ce type de technique pour assembler des couches entre elfes : l'aiguilletage permet de créer des ponts entre les couches textile à travers la couche de particules minérales, ces ponts maintenant en place les particules de la couche particulaire, et évitant que celle-ci ne s'effondre sous son propre poids et ne s'amalgame sous l'effet de la gravité.

Selon une variante, les faces internes des couches textile tournées vers la couche de matériau particulaire sont munies de moyens adhésifs, afin de faciliter l'accrochage des particules de la couche de matériau particulaire aux couches textile.

Le mode de réalisation le plus simple de l'invention consiste en une structure sandwich à trois couches : couche textile/couche en matériau particulaire/couche textile. Mais il est également possible de concevoir une structure alternant n+1 couches textile avec n couches de matériau particulaire avec n ≥ 2, chacune des couches externes du panneau étant constituée d'une couche textile.

De préférence, la proportion pondérale de particules de la ou des couches de matériau particulaire par rapport à l'ensemble des couches de matériau particulaire et des couches textile est comprise entre 40 et 80%, notamment entre 50 et 70%, et est notamment d'environ 60%.

Le panneau selon l'invention peut être équipé de moyens de tenue mécanique, notamment d'un cadre en matériau rigide, notamment du type métallique ou composite, quand on souhaite qu'il présente, une certaine tenue, une certaine rigidité par lui-même. On obtient alors un panneau rigidifié qui peut permettre de garnir facilement de grandes surfaces planes. On peut aussi prévoir des couches continues ou discontinues, par exemple des feuilles de parement extérieures à but décoratif ou pour faciliter/guider la découpe.

Le panneau selon l'invention trouve notamment application dans le domaine du bâtiment ou du transport, dont le domaine automobile, le domaine ferroviaire, le domaine de l'aéronautique et celui du transport maritime.

D'autres caractéristiques et avantages de l'invention apparaîtront plus clairement à la lumière de la description qui va suivre et des dessins annexés, concernant des modes de réalisation particuliers, non limitatifs, en référence aux figures suivantes:
- Figures 1a,1b,1c: un procédé d'assemblage d'un panneau simple tri-couche selon l'invention,
- Figure 2 : un graphe représentant la tenue en température de deux panneaux, l'un selon l'invention et l'autre en tant qu'exemple comparatif,
- Figure 3 : des images d'un panneau selon l'invention (figure 3b) et d'un panneau comparatif (figure 3a).

Ces figures sont très schématiques et ne respectent pas nécessairement l'échelle entre les différents éléments représentés afin d'en faciliter la lecture. Les mêmes éléments portent les mêmes références dans l'ensemble des figures.

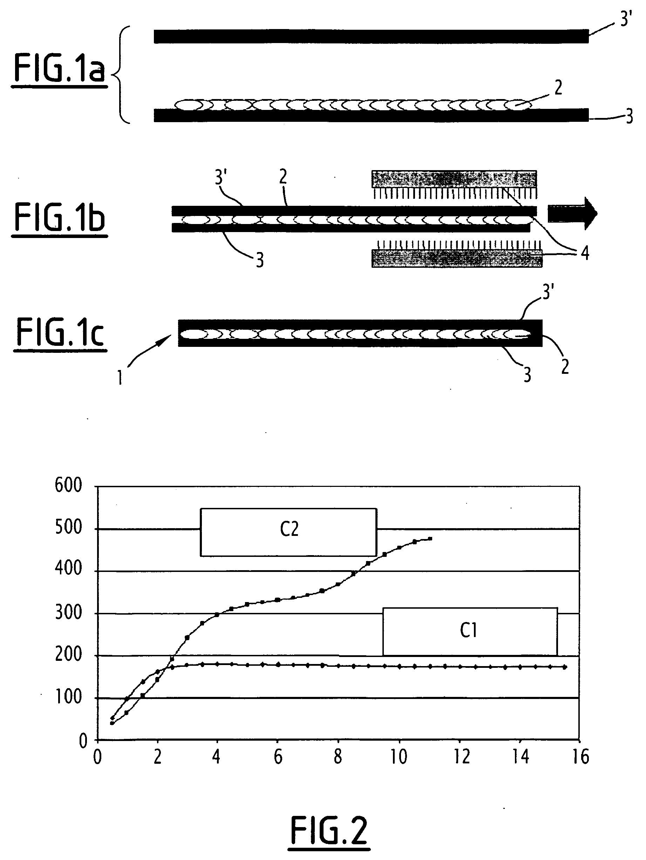

Comme représenté en figure 1c, les exemples selon l'invention concernent tous un panneau tri-couche 1 comprenant une couche particulaire 2 disposée entre deux couches de textile nontissé 3,3'.

La couche particulaire 2 se décline dans les exemples sous deux formes :
- Couche 2 de type A : à base de particules de vermiculite
- Couche 2 de type B : à base de particules d'alumine
- Couches textile 3,3' : choisies identiques entre elles, et faites en nontissé à partir de fibres thermostables à base de polyamide-imide.La figure 1 permet d'expliquer l'assemblage des panneaux 1 selon l'invention : dans une première étape (figure 1a), on dispose selon un plan sensiblement horizontal une des deux couches 3 textile, puis on saupoudre cette couche 3 avec des particules minérales (vermiculite ou alumine modifiée selon les cas) avec une saupoudreuse, dispositif connu en soi et qui ne sera donc pas décrit en détails ici, jusqu'à constituer une couche 2 d'épaisseur voulue. L'étape suivante (figure 1b) consiste à poser sur la couche 2 une couche textile 3' identique à la couche textile 3, puis à assembler le tri-couche par aiguilletage : deux séries d'aiguilles 4 disposées de part et d'autre du tri-couche 3,2,3', et très schématiquement représentées, viennent pénétrer sur une certaine épaisseur dans le tri-couche et enchevêtrer entre elles certaines des fibres des couches textile 3,3' en en modifiant l'orientation de façon à assurer la cohésion de l'ensemble des trois couches, les particules de la couche 2 étant retenues par ces fibres ainsi orientées dans le sens de l'épaisseur du produit qui viennent constituer des ponts entre les couches 3 et 3'. Le procédé d'aiguilletage est connu pour renforcer la cohésion intrinsèque de couches de nontissé, l'invention en fait une application très particulière, pour assembler des couches comprenant une couche de particules libres. La figure 1c représente le panneau fini, avec les trois couches 2,3,3' assemblées.

Il est possible de prévoir un cadre rigide (non représenté), si l'on veut un panneau destiné à isoler des surfaces planes, de géométrie simple. Il est également possible de prévoir une couture périphérique ou un moyen de collage périphérique afin de parfaire le maintien du matériau particulaire au sein du panneau et d'éviter la dispersion du matériau en périphérie.

Le tableau 1 ci-dessous récapitule les données concernant des panneaux selon des exemples 1 à 7, avec :
- Q1 correspondant au pourcentage pondéral de particules minérales de la couche 2 par rapport à celle des couches textile 3 et 3',
- Q2 correspondant au pourcentage en poids des particules minérales de la couche 2 par rapport à l'ensemble du panneau 1, à savoir le poids des trois couches 2,3 et 3',
- Q3 correspondant à la masse surfacique de la couche 2 en particules minérales,
- Q4 correspondant à la masse surfacique du panneau 1 en entier,
- La granulométrie indiquée correspondant à celle des particules minérales de la couche 2.

**Tableau 1**

| Ex. n° | Couche 2 | Granulométrie (µm) | Q1 (%) | Q2 (%) | Q3 (g/m²) | Q4 (g/m²) |
|---|---|---|---|---|---|---|
| 1 | A | 1000-2000 | 140% | 58% | 700 | 1200 |
| 2 | A | 1000-2000 | 80% | 45% | 400 | 900 |
| 3 | A | ≤ 500 | 80% | 45% | 400 | 900 |
| 4 | A | ≤ 500 | 40% | 29% | 200 | 700 |
| 5 | A | ≤ 500 | 140% | 58% | 700 | 1200 |
| 6 | B | 1300-2300 | 140% | 58% | 700 | 1200 |
| 7 | B | ≤ 500 | 140% | 58% | 700 | 1200 |

Un test de tenue en température a été mené sur ces exemples, consistant à exposer une des faces des panneaux à une température de 600°C, afin de simuler un démarrage de feu au voisinage des panneaux.

La figure 2 représente la courbe C1 de montée en température du panneau, selon l'exemple 1, et la courbe C2 de montée en température d'un panneau selon un exemple comparatif, qui n'est constitué que de l'assemblage de deux couches textile 3,3', sans couche particulaire 2 intermédiaire, ces couches textile étant de même composition de celle selon l'exemple 1, leurs épaisseurs ayant été ajustées de façon à ce que le panneau comparatif présente la même masse volumique que le panneau de l'exemple 1. Ce graphe représente en abscisse le temps en minutes, et, en ordonnée, la température en degrés Celsius, mesurée sur la face arrière du panneau, c'est-à-dire la face opposée à la face exposée à la chaleur selon le test.

On observe, au vu de ce graphe, que la courbe C1 concernant l'exemple 1 selon l'invention présente un plateau de température aux environs de 180°C entre 2 et 16 minutes, alors que la courbe C2 de l'exemple comparatif dépasse les 200°C dès 2 minutes 30, puis monte au-delà de 400°C vers 8 minutes 30. On en déduit que le panneau de l'exemple 1 selon l'invention retarde la propagation du feu de façon nettement plus efficace que celui selon l'exemple comparatif, ce qui démontre l'effet très bénéfique de la couche intermédiaire 2, qui, probablement, favorise la répartition de la chaleur sur toute sa surface, en évitant la formation de points chauds localisés.

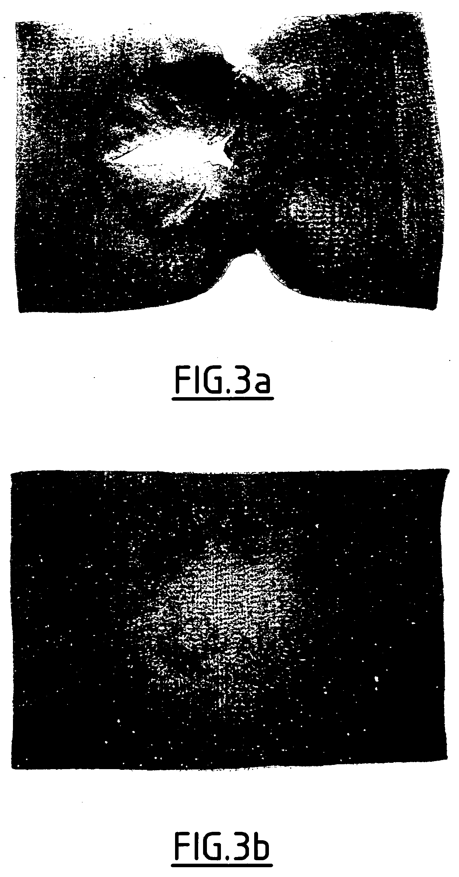

Les figures 3a et 3b sont des images des panneaux selon ces deux exemples, à l'issue de ce test thermique, soit au bout de 20 minutes d'exposition à 600°C sur l'une de leurs faces. La figure 3a est le panneau selon l'exemple comparatif, on voit qu'il est fortement dégradé, avec un affaissement de la structure du panneau, qui présente une large ouverture par laquelle un feu peut s'engouffrer. Au contraire, le panneau selon l'exemple 1de l'invention représenté à la figure 3b est toujours intègre, en ce sens qu'il ne présente aucune ouverture, bien que, comme dans le cas de l'exemple comparatif, les fibres polymère des couches textile 3,3' soient carbonisées. Même au bout de 20 minutes d'exposition au feu, il conserve donc encore une certaine action pare-feu, contrairement au panneau selon l'exemple comparatif.

Différents tests (comparatif des essais du tableau 1) ont montré par ailleurs que les panneaux utilisant un matériau particulaire sous forme de vermiculite présentaient des performances thermiques un peu supérieures à celles des panneaux utilisant un matériau particulaire sous forme d'alumine.

Il est également apparu qu'il était plus intéressant d'utiliser des couches textile associant des fibres minérales et des fibres en polymère thermostables plutôt qu'uniquement en fibres minérales.

Enfin, l'ajustement de la quantité de matériau particulaire dans le panneau permet de concilier les performances thermiques et la facilité de fabrication, puisqu'une quantité importante de matériau particulaire est favorable aux propriétés thermiques du panneau, mais peut, par ailleurs, complexifier sa fabrication, car une couche « trop épaisse » de matériau particulaire est plus délicate à piéger par simple aiguilletage entre des couches textile. Une proportion pondérale d'environ 50 à 70% de matériau particulaire par rapport à la quantité totale du panneau s'est avérée particulièrement appropriée (exemples 1 et 5 à 7 du tableau 1).

Il est apparu également que la granulométrie du matériau particulaire pouvait influer sur les propriétés thermiques du panneau, et que les granulométries les plus grosses testées (exemples 1 et 2 pour la vermiculite) donnaient de meilleurs résultats que des granulométries plus fines (exemples 3 à 5), toutes choses égales par ailleurs, un phénomène qui pourrait être lié au fait que des granulométries plus grosses permettent d'emprisonner plus d'air interstitiel.

L'invention ne se limite pas à ces modes de réalisation spécifiques. Elle peut notamment, prévoir des couches supplémentaires dans l'empilement de couches, par exemple dédoubler des couches textile ou alterner plusieurs couches de matériau particulaire avec des couches textile. On peut également envisager de mélanger plusieurs types de matériau particulaire dans les couches 2, ou encore mélanger plusieurs granulométries.

Enfin, les panneaux selon l'invention, en usage normal, présentent de bonnes propriétés d'isolation thermique et acoustique. Ils peuvent présenter ces propriétés isolantes/pare-feu tout en restant globalement légers et peu épais (par exemple d'au plus 25 ou 20mm, par exemple de l'ordre de 15 mm pour un empilement à trois couches avec deux couches textile disposées de part et d'autre d'une couche de fibres minérales), et ils sont très flexibles, ce qui permet d'envisager des applications très variées, puisqu'ils s'adaptent sans problème à des surfaces courbes.

Dans le domaine du ferroviaire, on peut ainsi les utiliser pour isoler (sur le plan thermique et/ou sur le plan acoustique) et protéger du feu des planchers, des pavillons, des gaines de ventilation ou encore des parois de coffres électriques.

## Revendications

1. Panneau isolant (1) comportant une couche de matériau particulaire (2) comprenant essentiellement des particules minérales, ladite couche étant disposée entre deux couches textile (3,3') comprenant des fibres minérales et/ou des fibres à base d'au moins un polymère thermostable,
**caractérisé en ce que** l'une au moins des couches textile (3,3') comprend des fibres minérales et des fibres à base d'au moins un polymère thermostable, la proportion pondérale entre fibres minérales et fibres à base d'au moins un polymère thermostable dans ladite au moins une couche textile (3,3') étant comprise entre 50/50 et 90/10.

2. Panneau (1) selon la revendication précédente, **caractérisé en ce que** les particules minérales sont à base d'au moins un matériau choisi parmi la vermiculite, l'alumine et la perlite

3. Panneau (1) selon l'une des revendications précédentes, **caractérisé en ce que** les particules minérales sont des particules pleines, de type poudre, ou creuses, de type sphères creuses.

4. Panneau (1) selon l'une des revendications précédentes, **caractérisé en ce que** la dimension des particules minérale est comprise entre 2500 et 800 µm, notamment entre 2300 et 1000 µm.

5. Panneau (1) selon l'une des revendications 1 à 3, **caractérisé en ce que** la dimension des particules minérale est inférieure ou égale à 800 µm, notamment inférieure ou égale à 500 µm, et de préférence comprise entre 200 et 500 µm.

6. Panneau (1) selon l'une des revendications précédentes, **caractérisé en ce que** l'une au moins des couches textile (3,3') est une couche textile nontissé.

7. Panneau (1) selon l'une des revendications précédentes, **caractérisé en ce qu'**au moins une des couches textile (3,3') comprend des fibres minérales à base d'au moins un matériau choisi parmi le basalte, le verre, la silice.

8. Panneau (1) selon l'une des revendications précédentes, **caractérisé en ce qu'**au moins une des couches textile (3,3') comprend des fibres à base d'au moins un polymère thermostable, notamment en polyamide-imide, en aramide et/ou en polyacrylate.

9. Panneau (1) selon l'une des revendications précédentes, **caractérisé en ce que** les couches (2,3,3') sont assemblées entre elles par aiguilletage des couches textile (3,3') à travers la couche de matériau particulaire (2) disposée entre celles-ci.

10. Panneau (1) selon l'une des revendications précédentes, **caractérisé en ce que** les faces internes des couches textile (3,3') tournées vers la couche de matériau particulaire (2) sont munies de moyens adhésifs.

11. Panneau (1) selon l'une des revendications précédentes, **caractérisé en ce qu'**il comprend une alternance de n couches de matériau particulaire (2) et de n+1 couches textile (3,3'), avec n ≥ 2.

12. Panneau (1) selon l'une des revendications précédentes, **caractérisé en ce que** la proportion pondérale de particules de la ou des couches de matériau particulaire (2) par rapport à l'ensemble des couches de matériau particulaire (2) et des couches textile (3,3') est comprise entre 40 et 80%, notamment entre 50 et 70%, et est notamment d'environ 60%.

13. Panneau (1) selon l'une des revendications précédentes, **caractérisé en ce qu'**il est équipé de moyens de tenue mécanique, notamment d'un cadre en matériau rigide, notamment du type métallique ou composite.

14. Procédé d'assemblage d'un panneau (1) selon l'une des revendications précédentes, **caractérisé en ce qu'**on assemble entre elles les différentes couches (2,3,3') du panneau par aiguilletage des couches textile (3,3')à travers la couche de matériau particulaire (2) disposée entre celles-ci.

15. Application du panneau (1) selon l'une quelconque des revendications 1 à 13 au domaine du bâtiment ou du transport, dont le domaine automobile, le domaine ferroviaire, le domaine de l'aéronautique et celui du transport maritime.

## Patentansprüche

1. Dämmplatte (1) aufweisend eine Schicht aus Partikelmaterial (2), welches hauptsächlich anorganische Partikeln aufweist, wobei die Schicht zwischen zwei Textilschichten (3, 3 ') angeordnet ist, welche anorganische Fasern und / oder Fasern auf Basis mindestens eines thermostabilen Polymers aufweisen, **dadurch gekennzeichnet, dass** mindestens eine der Textilschichten (3, 3') anorganische Fasern und Fasern auf Basis mindestens eines thermostabilen Polymers aufweist, wobei der Gewichtsanteil zwischen anorganischen Fasern und Fasern auf Basis mindestens eines thermostabilen Polymers in der mindestens einen Textilschicht (3, 3') zwischen 50/50 und 90/10 liegt.

2. Platte (1) nach dem vorhergehenden Anspruch, **dadurch gekennzeichnet, dass** die anorganischen Partikeln auf Basis mindestens eines Materials ausgewählt aus Vermiculit, Aluminiumoxid und Perlit ist.

3. Platte (1) nach einem der vorhergehenden Ansprüche, **dadurch gekennzeichnet, dass** die anorganischen Partikeln volle, vom Pulvertyp, oder hohle, vom Hohlkugeltyp, Partikel sind.

4. Platte (1) nach einem der vorhergehenden Ansprüche, **dadurch gekennzeichnet, dass** die Größe der anorganischen Partikeln zwischen 2500 und 800 µm, insbesondere zwischen 2300 und 1000 µm liegt.

5. Platte (1) nach einem der Ansprüche 1 bis 3, **dadurch gekennzeichnet, dass** die Größe der anorganischen Partikeln weniger als oder gleich 800 µm, insbesondere weniger als oder gleich 500 µm sind und vorzugsweise zwischen 200 und 500 µm liegt.

6. Platte (1) nach einem der vorhergehenden Ansprüche, **dadurch gekennzeichnet, dass** mindestens eine der Textilschichten (3, 3 '), eine Vliestextilschicht ist.

7. Platte (1) nach einem der vorhergehenden Ansprüche, **dadurch gekennzeichnet, dass** mindestens eine der Textilschichten (3,3 '), anorganische Fasern auf Basis mindestens eines Materials ausgewählt aus Basalt, Glas, Kieselsäure aufweist.

8. Platte (1) nach einem der vorhergehenden Ansprüche, **dadurch gekennzeichnet, dass** mindestens eine der Textilschichten (3, 3 ') Fasern auf Basis mindestens eines thermostabilen Polymers, insbesondere aus Polyamidimid, aus Aramid und / oder aus Polyacrylat aufweist.

9. Platte (1) nach einem der vorhergehenden Ansprüche, **dadurch gekennzeichnet, dass** die Schichten (2, 3, 3 ') durch Vernadelung der Textilschichten (3, 3') durch die Schicht aus Partikelmaterial (2), welche dazwischen angeordnet ist, miteinander verbunden sind.

10. Platte (1) nach einem der vorhergehenden Ansprüche, **dadurch gekennzeichnet, dass** die Innenflächen der Textilschichten (3, 3 '), welche zu der Schicht aus Partikelmaterial (2) hin gewandt sind, mit Klebstoffen versehen sind.

11. Platte (1) nach einem der vorhergehenden Ansprüche, **dadurch gekennzeichnet, dass** sie eine abwechselnde Folge von n Schichten aus Partikelmaterial (2) und n + 1 Textilschichten (3,3 ') mit n ≥ 2 aufweist.

12. Platte (1) nach einem der vorhergehenden Ansprüche, **dadurch gekennzeichnet, dass** der Gewichtsanteil der Partikel der Schicht/en aus Partikelmaterial (2) in Bezug auf die gesamten Schichten aus Partikelmaterial (2) und Textilschichten (3,3 ') zwischen 40 und 80%, insbesondere zwischen 50 und 70%, und insbesondere etwa 60% liegt.

13. Platte (1) nach einem der vorhergehenden Ansprüche, **dadurch gekennzeichnet, dass** sie mit Mitteln zum mechanischen Halten, insbesondere einem Rahmen aus starrem Material, insbesondere des Metall- oder Verbund-Typs ausgestattet ist.

14. Verfahren zum Zusammenfügung einer Platte (1) nach einem der vorhergehenden Ansprüche, **dadurch gekennzeichnet, dass** die verschiedenen Schichten (2,3,3') der Platte durch Vernadelung der Textilschichten (3,3 ') durch die Schicht aus Partikelmaterial (2),welche dazwischen angeordnet ist, zusammengefügt werden.

15. Verwendung der Platte (1) nach einem der Ansprüche 1 bis 13 auf dem Gebiet des Baus oder Transports, umfassend den Automobilbereich, den Eisenbahnbereich, den Bereich der Luftfahrt und jenen des Seetransports.

## Claims

1. Insulating panel (1) having a layer of particulate material (2) substantially comprising mineral particles, said layer being arranged between two textile layers (3,3') comprising mineral fibres and/or fibres based on at least one thermostable polymer,
**characterised in that** at least one of the textile layers (3,3') comprises mineral fibres and fibres based on at least one thermostable polymer, the proportion by weight between mineral fibres and fibres based on at least one thermostable polymer in said at least one textile layer (3,3') being between 50/50 and 90/10.

2. Panel (1) according to the preceding claim, **characterised in that** the mineral particles are based on at least one material selected from vermiculite, alumina and perlite.

3. Panel (1) according to one of the preceding claims, **characterised in that** the mineral particles are full particles, of a powder type, or hollow particles, of a hollow sphere type.

4. Panel (1) according to one of the preceding claims, **characterised in that** the dimension of the mineral particles is between 2500 and 800 µm, especially between 2300 and 1000 µm.

5. Panel (1) according to one of claims 1 to 3, **characterised in that** the dimension of the mineral particles is less than or equal to 800 µm, especially less than or equal to 500 µm, and preferably between 200 and 500 µm.

6. Panel (1) according to one of the preceding claims, **characterised in that** at least one of the textile layers (3,3') is a nonwoven textile layer.

7. Panel (1) according to one of the preceding claims, **characterised in that** at least one of the textile layers (3,3') comprises mineral fibres based on at least one material selected from basalt, glass and silica.

8. Panel (1) according to one of the preceding claims, **characterised in that** at least one of the textile layers (3,3') comprises fibres based on at least one thermostable polymer, especially of polyamide-imide, of aramid and/or of polyacrylate.

9. Panel (1) according to one of the preceding claims, **characterised in that** the layers (2,3,3') are assembled together by needling the textile layers (3,3') through the layer of particulate material (2) arranged between them.

10. Panel (1) according to one of the preceding claims, **characterised in that** the inner faces of the textile layers (3,3') facing the layer of particulate material (2) are provided with adhesive means.

11. Panel (1) according to one of the preceding claims, **characterised in that** it comprises an alternation of n layers of particulate material (2) and n+1 textile layers (3,3'), wherein n ≥ 2.

12. Panel (1) according to one of the preceding claims, **characterised in that** the proportion by weight of particles of the layer(s) of particulate material (2) relative to the entirety of layers of particulate material (2) and textile layers (3,3') is between 40 and 80 %, especially between 50 and 70 %, and is especially about 60 %.

13. Panel (1) according to one of the preceding claims, **characterised in that** it is provided with mechanical holding means, especially a frame of rigid material, especially of a metal or composite type.

14. Method of assembling a panel (1) according to one of the preceding claims, **characterised in that** the various layers (2,3,3') of the panel are assembled together by needling the textile layers (3,3') through the layer of particulate material (2) arranged between them.

15. Application of the panel (1) according to any one of claims 1 to 13 in the field of building or transport, including the automotive field, the railway field, the field of aeronautics and that of maritime transport.
